**Europäisches Patentamt**

**European Patent Office**

**Office européen des brevets**

(19)

(11) Veröffentlichungsnummer : **0 466 637 A1**

(12) # EUROPÄISCHE PATENTANMELDUNG

(21) Anmeldenummer : **91810441.5**

(22) Anmeldetag : **11.06.91**

(51) Int. Cl.$^5$ : **F16L 7/00, B60J 10/00, F16L 59/14**

(30) Priorität : **12.07.90 CH 2334/90**

(43) Veröffentlichungstag der Anmeldung :
**15.01.92 Patentblatt 92/03**

(84) Benannte Vertragsstaaten :
**CH DE FR GB LI NL**

(71) Anmelder : **GEBRÜDER SULZER AKTIENGESELLSCHAFT**
**Zürcherstrasse 9**
**CH-8401 Winterthur (CH)**

(72) Erfinder : **Inhelder, Ernst**
**Römerhofstrasse 22**
**CH-8542 Wiesendangen (CH)**

(54) **Tieftemperatur-Transferleitung.**

(57) Die Erfindung betrifft eine Tieftemperatur-Transferleitung, welche ein evakuiertes Aussenrohr (1), mindestens eine vor Wärmeeinfall zu schützende Tieftemperaturleitung (2), einen metallischen Schutzschild (3), eine metallische Wärmeabfuhrleitung (4) und Wärmeübertragungselemente (5) zwischen Schutzschild (3) und Wärmeabfuhrleitung (4) besitzt. Erfindungsgemäss weisen die Wärmeübertragungselemente Zonen (6) mit einer Gefügebindung zur Wärmeabfuhrleitung (4) und Zonen (7) mit einer Gefügebindung zum Schutzschild (3) auf. Ausserdem bestehen an den Wärmeübertragungselementen (5) Zonen (8) zwischen Wärmeabfuhrleitung (4) und Schutzschild (3), die sich ohne wesentliche Verkleinerung des Wärmeleitungsquerschnittes durch eine geringe Biegesteifigkeit bezüglich Bewegungen in Richtung der Rohrachse auszeichnen, um in Richtung der Rohrachse (9) eine flexible Verbindung zu erreichen. Die Wärmeübertragungselemente können im Bereich der Zonen (8) als Litzenband (10), als flach gepresster, geflochtener Litzenschlauch (11), als geschichtete Blechstreifen (13) oder als geschichtete Drähte (14) gestaltet sein.

EP 0 466 637 A1

Jouve, 18, rue Saint-Denis, 75001 PARIS

# Fig.1

Die Erfindung betrifft eine Tieftemperatur-Transferleitung, welche ein evakuiertes umhüllendes Aussenrohr, mindestens eine vor Wärmeeinfall zu schützende Tieftemperaturleitung, einen metallischen Schutzschild, eine metallische Wärmeabfuhrleitung und Wärmeübertragungselemente zwischen Schutzschild und Wärmeabfuhrleitung besitzt.

Tieftemperatur-Transferleitungen sind z.B. bei Supraleitersystemen notwendig, um in Kavitäten der Umgebung des Supraleiters Wärme zu entziehen und sehr tiefe Absoluttemperaturen zu erreichen. Die üblichen Tieftemperatur-Transferleitungen schützen die eigentlichen, ein Medium mit der tiefsten Temperatur führenden Tieftemperaturleitungen mit einem Schutzschild, der auf einer etwas weniger tiefen Temperatur gehalten wird. Dieser Schutzschild ist meistens ein Kupferrohr, das die von aussen einfallende Wärme an eine metallische Wärmeabfuhrleitung mit möglichst gutem Wärmeübergang übertragen soll. Einerseits wird eine möglichst grossflächige Gefügebindung, wie Hartlöten zwischen Schutzschild und Wärmeabfuhrleitung, angestrebt und andererseits entstehen bei langen Transferleitungen zu grosse Kräfte an den Verbindungsstellen wegen unterschiedlicher Wärmeausdehnungskoeffizienten verschiedener Materialien oder wegen grosser Temperaturdifferenzen beim Anfahren der Anlage.

Hier schafft die Erfindung Abhilfe. Sie löst die Aufgabe, zwischen Schutzschild und Wäremabfuhrleitung eine gut wärmeleitende Verbindung herzustellen, die gegen Verschiebungen wegen Wärmeausdehnungen unempfindlich ist und eine einfache Montage der Wärmeabfuhrleitung ermöglicht. Gemäss der Erfindung wird die Aufgabe dadurch gelöst, dass metallische Wärmeübertragungselemente Zonen mit einer Gefügebindung zur Wärmeabfuhrleitung und Zonen mit einer Gefügebindung zum Schutzschild aufweisen und Zonen besitzen, die sich ohne wesentliche Verkleinerung des Wärmeleitungsquerschnittes durch eine geringe Biegesteifigkeit bezüglich Bewegungen in Richtung der Rohrachse der Wärmeabfuhrleitung auszeichnen, um in Richtung der Rohrachse eine flexible Verbindung zu erreichen.

Die Vorteile der Erfindung sind darin zu sehen, dass die Herstellung von langen Tieftemperatur-Transferleitungen vereinfacht wird. Die abhängigen Ansprüche 2 bis 5 beziehen sich auf vorteilhafte Weiterbildungen der Erfindung.

Im folgenden wird die Erfindung anhand von Ausführungsbeispielen beschrieben. Es zeigen:

Fig. 1 Die Draufsicht auf eine geschnittene Tieftemperatur-Transferleitung mit einem metallischen Wärmeübertragungselement zwischen Schutzschild und Wärmeabfuhrleitung;

Fig. 2 den vergrösserten Ausschnitt eines Wärmeübertragungselements, das aus einem Litzenband besteht;

Fig. 3 den vergrösserten Ausschnitt eines Wärmeübertragungselementes, das aus einem flachgepressten, geflochtenen Litzenschlauch besteht;

Fig. 4 den vergrösserten Ausschnitt eines Wärmeübertragungselementes, das aus geschichteten Blechstreifen mit grosser zulässiger Biegeverformung in Richtung der Rohrachse besteht und

Fig. 5 den vergrösserten Ausschnitt eines Wärmeübertragungselementes, das aus geschichteten Drähten besteht.

Die Figuren zeigen eine Tieftemperatur-Transferleitung, welche ein evakuiertes Aussenrohr 1, mindestens eine vor Wärmeeinfall zu schützende Tieftemperaturleitung 2, einen metallischen Schutzschild 3, eine metallische Wärmeabfuhrleitung 4 und Wärmeübertragungselemente 5 zwischen Schutzschild 3 und Wärmeabfuhrleitung 4 besitzt. Erfindungsgemäss weisen die Wärmeübertragungselemente Zonen 6 mit einer Gefügebindung zur Wärmeabfuhrleitung 4 und Zonen 7 mit einer Gefügebindung zum Schutzschild 3 auf. Ausserdem bestehen an den Wärmeübertragungselementen 5 Zonen 8 zwischen Wärmeabfuhrleitung 4 und Schutzschild 3, die sich ohne wesentliche Verkleinerung des Wärmeleitungsquerschnittes durch eine geringe Biegesteifigkeit bezüglich Bewegungen in Richtung der Rohrachse auszeichnen, um in Richtung der Rohrachse 9 eine flexible Verbindung zu erreichen. Die Wärmeübertragungselemente können im Bereich der Zonen 8 als Litzenband 10, als flach gepresster, geflochtener Litzenschlauch 11, als geschichtete Blechstreifen 13 oder als geschichtete Drähte 14 gestaltet sein.

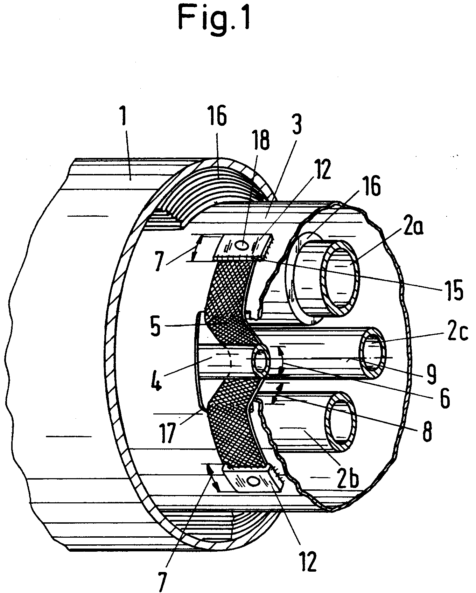

In Fig. 1 sind die Tieftemperaturleitungen 2a, 2b gezeigt, die als Vor- und Rücklauf ein Fluid von etwa 4 K zu einem zu kühlenden Kryostat, z.B. einem Supraleiter, zu- und abführen. Beide Leitungen sind mit einer gegen aussen wirkenden Isolierfolie 16 umwickelt und mit möglichst wenig Wärmebrücken von einem als Schutzschild 3 ausgebildeten Kupferrohr umgeben, das seinerseits ebenfalls mit einer gegen aussen wirkenden Isolierfolie 16 umwickelt ist, um die einfallende Wärme niedrig zu halten, und mit möglichst wenig Wärmebrücken auf dem Aussenrohr 1 abgestützt ist. Zur Konstanthaltung der Temperatur im Schutzschild 3 und in der Abschirmung des Supraleiters sind diese mit der als Rücklaufleitung ausgeführten Wärmeabfuhrleitung 4 verbunden, um die einfallende Wärme mit möglichst wenig Temperaturgefälle an die Wärmeabfuhrleitung 4 mit einem Fluid von 80 K abzugeben. Die Leitung 2c kann z.B. mit einer Temperatur von 40 K die Vorlaufleitung zur Wärmeabfuhrleitung 4 sein.

Auf der Wärmeabfuhrleitung 4 sind in axialen Abständen, die beispielsweise der 10- bis 30-fachen Breite eines Litzenbandes 10 entsprechen, Litzenbänder 10 aus Kupfer oder anderen Metallen über eine Zone 6 am Umfang der Wärmeabfuhrleitung 4 hartverlötet. Die Wärmeabfuhrleitung lässt sich mit überhängenden Litzenbändern 10 vorfertigen und montieren. Bei Montage ausserhalb des Schutzschildes 3 kann dieser in Längsrichtung eine Sicke nach innen aufweisen, in die die Wärmeabfuhrleitung 4 mit den angelöteten Litzenbändern 10 eingelegt wird. Bei der in Fig. 1 gezeigten Montage innerhalb des Schutzschildes 3 sind im Schutzschild 3 Fenster 17 angebracht, durch die die überhängenden Litzenbänder 10 nach aussen gezogen werden, um sie von aussen auf einer Länge der Zone 7 mit dem Schutzschild 3 hart zu verlöten. Zum besseren Anpressen und Löten sind Haltestücke 12 vorgesehen, wobei zwichen den Haltestücken 12 und dem Schutzschild 3 das Litzenband 10 und eventuell eingelegtes Lot verpresst werden. Um das anschliessende Löten zeitlich trennen zu können und keine hinderlichen Anpresswerkzeuge im Wege zu haben, werden die Halteplatten 12 mit Pop-Nieten 18 am Schutzschild 3 befestigt. Da die Wärmeübertragungselemente in der Zone 8 eine grosse Oberfläche aufweisen, genügt - trotz der guten Wärmeleitung im Vakuum - für das Löten der Zonen 7 bei Atmosphärendruck ein geringer, kühlender Gasstrom, um bereits gelötete Zonen 6 vor Ueberhitzung zu schützen.

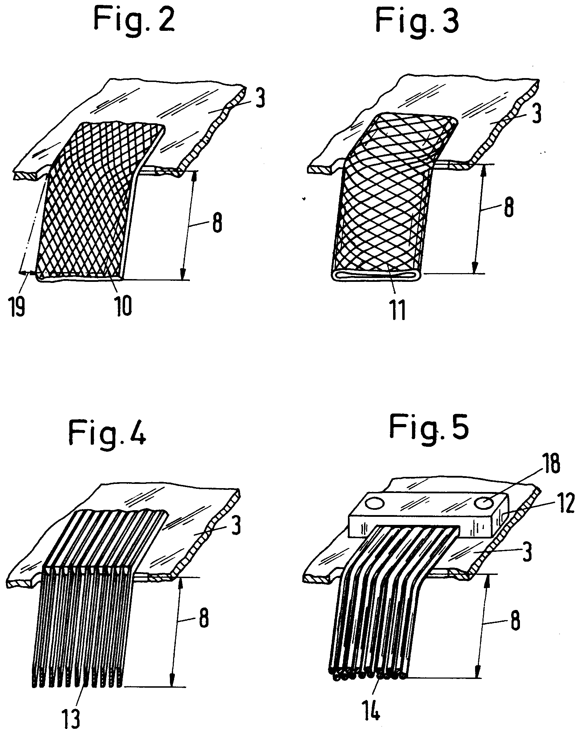

In den Fig. 2 bis 5 sind Varianten von Wärmeübertragungselementen 5 in der Zone 8 gezeigt, die beide Vorteile "grosse Flexibilität 19 in Richtung Rohrachse 9" und "gute Kühlmöglichkeit für Hartlöten an Atmosphäre" auf sich vereinigen.

## Patentansprüche

1. Tieftemperatur-Transferleitung, welche ein evakuiertes umhüllendes Aussenrohr (1), mindestens eine vor Wärmeeinfall zu schützende Tieftemperaturleitung (2), einen metallischen Schutzschild (3), eine metallische Wärmeabfuhrleitung (4) und Wärmeübertragungselemente (5) zwischen Schutzschild (3) und Wärmeabfuhrleitung (4) besitzt, dadurch gekennzeichnet, dass metallische Wärmeübertragungselemente (5) Zonen (6) mit einer Gefügebindung zur Wärmeabfuhrleitung (4) und Zonen (7) mit einer Gefügebindung zum Schutzschild (3) aufweisen und Zonen (8) besitzen, die sich ohne wesentliche Verkleinerung des Wärmeleitungsquerschnittes durch eine geringe Biegesteifigkeit bezüglich Bewegungen in Richtung der Rohrächse (9) der Wärmeabfuhrleitung (4) auszeichnen, um in Richtung der Rohrachse (9) eine flexible Verbindung zu erreichen.

2. Transferleitung nach Anspruch 1, dadurch gekennzeichnet, dass das metallische Wärmeübertragungselement (5) aus einem Litzenband (10) oder aus einem flachgepressten geflochtenen Litzenschlauch (11) besteht, welche quer zur Laufrichtung der Litze eine geringe Biegesteifigkeit aufweisen.

3. Transferleitung nach Anspruch 1, dadurch gekennzeichnet, dass das metallische Wärmeübertragungselement aus geschichteten Blechstreifen (13) oder Drähten (14) besteht.

4. Transferleitung nach einem der Ansprüche 1 bis 3, dadurch gekennzeichnet, dass metallische Haltestücke (12) in den gefügebildenden Zonen (6,7) aufgesetzt sind, um die Bildung einer Lötverbindung (15) zu unterstützen.

5. Transferleitung nach Anspruch 4, dadurch gekennzeichnet, dass metallische Haltestücke (12) vor dem Lötvorgang am Schutzschild (3) mechanisch mit diesem verbunden sind und die Wärmeübertragungselemente (5) an diesen anpressen.

# Fig.1

# Fig. 2

# Fig. 3

# Fig. 4

# Fig. 5

**Europäisches Patentamt**

# EUROPÄISCHER RECHERCHENBERICHT

Nummer der Anmeldung

EP 91 81 0441

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 090 023 (C.G.E.)<br>* das ganze Dokument *<br>--- | 1-3,5 | F16L7/00<br>B60J10/00<br>F16L59/14 |
| A | FR-A-2 087 499 (C.G.E.)<br>* das ganze Dokument *<br>--- | 1-3,5 | |
| A | US-A-3 992 169 (LOUDON)<br>* Zusammenfassung; Abbildungen 8-8A *<br>----- | 1 | |

**RECHERCHIERTE SACHGEBIETE (Int. Cl.5 )**

F16L
B60J
H01B

Der vorliegende Recherchenbericht wurde für alle Patentansprüche erstellt

| Recherchenort | Abschlußdatum der Recherche | Prüfer |
|---|---|---|
| DEN HAAG | 02 OCTOBER 1991 | NARMINIO A. |

### KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................
& : Mitglied der gleichen Patentfamilie, übereinstimmendes Dokument

EPO FORM 1503 03.82 (P0403)